# EUROPEAN PATENT SPECIFICATION

(11) **EP 2 294 491 B1**
(45) Date of publication and mention of the grant of the patent: **12.02.2020**
(21) Application number: 09755071.9
(22) Date of filing: 26.05.2009
(51) Int. Cl.: G05D 7/06, G05D 11/13, B01J 19/00

(54) **REACTION ASSEMBLY AND FLOW SPLITTER**
REAKTIONSBAUGRUPPE UND FLUSSTEILER
ENSEMBLE DE RÉACTION ET SÉPARATEUR D ÉCOULEMENT

(30) Priority: 26.05.2008 NL 2001617; 23.06.2008 NL 2001711; 23.12.2008 NL 2002365
(43) Date of publication of application: 16.03.2011
(73) Proprietor: Avantium Technologies B.V., 1014 BV Amsterdam (NL)
(72) Inventor: MOONEN, Roelandus Hendrikus Wilhelmus, 1014 BV Amsterdam (NL); BODENSTAFF, Emilio René, 1014 BV Amsterdam (NL); SMIT, Martin, 1014 BV Amsterdam (NL)
(74) Representative: Wurfbain, Gilles L.
(86) International application number: PCT/NL2009/000122
(87) International publication number: WO 2009/145614

(56) References cited:
- EP-A2- 1 707 941
- WO-A-96/08718
- WO-A-99/64160
- GB-A- 2 381 589

## Description

The invention pertains to a reaction system. The invention also pertains to a flow splitter for splitting a primary fluid flow into a plurality of secondary fluid flows for performing experiments.

When experiments are performed in parallel, often the reactors in which the experiments take place receive their feed from a single source. The reactor feed comes from this single source in a single, primary fluid flow which is then split into a plurality of secondary fluid flows. Each of the secondary fluid flows is then fed to a reactor in which a reaction can take place.

Often it is desirable that all secondary fluid flows have the same flow rate, as this contributes to creating the same reaction circumstances in all reactors. WO99/64160 discloses that a substantially equal flow distribution over all reactors can be obtained by arranging capillaries upstream of the reaction vessels. WO99/64160 also discloses that by heating a capillary, the viscosity of the fluid flowing through the capillary can be influenced, and thereby the flow rate of the fluid through the capillary can be influenced.

In practice, it has turned out that the system known from WO99/64160 is not suitable for experiments in which the flow rate of the secondary fluid flows and/or the ratio between the flow rates of the secondary fluid flows has to be controlled accurately, especially when small scale experiments are performed, for example experiments with flow rates below 2 ml/min. For example, the dimensions of individual capillaries vary due to manufacturing tolerances. This results in a variation in flow resistance between individual capillaries, and therewith in a variation in flow rates of the secondary fluid flows. Obtaining substantially equal flow rates for all secondary fluid flows is a cumbersome process, as it requires individual calibration and adaptation of all capillaries in order to obtain the desired flow resistance for each capillary. The generally applied way of adaptation of the flow resistance of a capillary is by changing its length, usually by cutting off small lengths of the capillary until the desired flow rate is obtained. This is a painstaking process as it is hard to make the cuts accurately enough and often too much is cut off, which means you have to start all over again. To do this right requires a lot of practice of the lab personnel involved.

This cumbersome process of adapting a capillary to obtain the desired flow resistance of course also occurs when a single capillary is applied in a reaction system.

Moreover, when a set of capillaries is used to split a primary flow into a plurality of secondary flows having a desired ratio of flow rates, the flow rates in all capillaries of the system change when the flow resistance of one capillary in the system is changed, because the ratio between the flow resistance of the different capillaries determines the distribution ratio of the primary flow over the secondary flows. So, if one capillary in the system has to be adapted to obtain the desired flow rate, all other capillaries have to be adapted as well.

Of course, every time an experiment with different desired flow rates or different viscosity of the substances flowing through the capillaries is to be performed, the cumbersome process of calibration and adaptation of the capillaries has to be carried out again.

Also, in practice it has turned out that even with very accurately calibrated capillaries, it is not possible to obtain a reliable and accurate splitting of the primary fluid flow in secondary fluid flows with equal flow rates or any other predetermined ratio of flow rates.

The object of the invention is to provide an improved reaction system and an improved flow splitter.

This object is achieved with a reaction system according to claim 9 and with a flow splitter according to claim 1.

In the reaction system, a primary fluid flow coming from a fluid supply unit is distributed over a plurality of reaction vessels. This distribution is achieved by the use of a plurality of capillary units, each being arranged downstream of the fluid supply unit and upstream of one of the reaction vessels. The capillary unit comprises a capillary, which has a resistance to fluid flow. The combination of the resistance to fluid flow of the individual capillaries determines in which proportions the primary fluid flow from the fluid supply is distributed over the individual reaction vessels.

The capillary in the housing of each capillary unit has been prepared beforehand. The resistance to fluid flow of the capillary at a reference temperature (e.g. room temperature) and with a fluid of a known viscosity has been measured and is therewith known. It is not necessary to prepare such a capillary to accurately have a predetermined resistance to fluid flow.

The heater and/or cooler of a capillary unit is adapted to change the temperature of the capillary of the capillary unit and therewith influences the flow rate of the fluid flow through that capillary. The temperature of the capillary affects the flow rate through that capillary in several ways: the viscosity of the fluid in the capillary depends from the temperature, the fluid expands when it is heated and maybe the inner dimensions of the capillary change a bit too because of thermal expansion effects. Both the viscosity of the fluid and the dimensions of the capillary are parameters that determine the flow resistance of the capillary, and therewith the flow rate of the fluid flow through that capillary. This means that the heater/cooler of the capillary unit can change the resistance to fluid flow of the capillary of the capillary unit over a certain range. For each capillary unit, the range of fluid flow resistance for which it can be applied is known, either through measurement, through calculations or through a combination thereof.

When a reaction system is put together for carrying out a specific experiment, the viscosity of the fluid flowing through the capillary units is determined, as well as the ratio to which the primary fluid flow is to be distributed over the reaction vessels. Based on this, for each reaction vessel, a suitable capillary unit is selected. "Suitable" means that the selected capillary unit can provide the desired resistance to fluid flow. It is not necessary that the capillary has precisely the desired resistance to fluid flow at ambient temperature or at the temperature of the fluid flowing through the capillary. It suffices that by using the heater/cooler to heat and/or cool the capillary of the capillary unit, the desired resistance to fluid flow in the capillary can be achieved.

The selected capillary units can then be arranged in the reaction system according to the invention. The flow, resistance of each of the capillaries is tuned by controlling the thermal output of the heater/cooler that is associated with the respective capillary. This can be done either before arranging the capillary unit in the reaction system or afterwards.

Tuning the flow resistance of the capillaries by using the heater/cooler is a lot simpler than tuning the flow resistance by cutting the capillary to length. It does not require the hand skills of the laboratory personnel. Also, it is possible to reverse your actions: you can both increase and decrease the flow resistance. When cutting the capillary to length, you cannot make the capillary longer again if you cut off too much.

That the capillaries are arranged in capillary units is further advantageous as it makes them easy to exchange and reusable. If each capillary unit is arranged in a cassette, it is even easier to exchange. A cassette is a lot easier to handle than a thin and springy capillary. Preferably, the cassette is provided with quick catch connections so that it can easily be put into fluid communication with the fluid supply unit and the reactors. Preferably, the cassette is also provided with electrical connectors so it can easily be connected to the flow adjustment unit (if that is not provided in the cassette as well), to the electrical feed for the heater/cooler and/or the flow sensor, and/or to other control units of the reaction system, for example for the exchange of measurement data. In this embodiment, the reaction system can be a modular system, in which parts can be easily exchanged for other parts to suit the requirements of different experiments.

In the reaction system, the flow adjustment unit determines the flow rate of the fluid flow, which can be a gas flow, a liquid flow, a combined gas/liquid flow, a flow of gel or any other like flow. The flow adjustment unit then determines the deviation of the flow rate of the fluid flow from a desired flow rate, and adjusts the flow rate by controlling the heater and/or cooler of the capillary unit. The heater and/or cooler changes the temperature of the capillary of the capillary unit and therewith influences the flow rate of the fluid flow through that capillary. The temperature of the capillary affects the flow rate through that capillary in several ways: the viscosity of the fluid in the capillary depends from the temperature, the fluid expands when it is heated and maybe the inner dimensions of the capillary change a bit too because of thermal expansion effects. Both the viscosity of the fluid and the dimensions of the capillary are parameters that determine the flow resistance of the capillary, and therewith the flow rate of the fluid flow through that capillary.

Each capillary unit can have its own flow adjustment unit, or a plurality of capillary units can be controlled by a single flow adjustment unit. The flow adjustment unit can be connected to or be part of an overall control system controlling the splitter, or when the splitter is used in a reaction system, of a reaction system control unit that controls the whole reaction system or a part thereof.

The capillary unit can also be used to compensate the flow distribution over the reaction vessels for pressure differences in the different reaction vessels. It is possible that while the reactions in the reaction vessels take place, a pressure difference starts to build up between amongst the reaction vessels. If that is the case, and nothing would be done, the flow distribution over the reaction vessels would change. However, by changing the resistance to fluid flow of the capillaries by their individual heater and/or cooler, this effect can be compensated so that the flow distribution over the reaction vessels remains the same.

The applicant has found that by providing the capillaries with thermal insulation, the flow rate in the capillary can be controlled more accurately. The applicant has found that this is probably because the flow rate through the capillaries appears to be very sensitive to temperature differences. The applicant found in his research that even a difference of 0.1 °C turned out to make a noticeable difference in flow rate when small scale experiments (for example with flow rates of about 2 ml/min or lower) or even very small scale experiments (with flow rates of in particular liquids of 1-10 microliters per minute or lower) are performed. This may explain why even accurately calibrated capillaries show varying flow rates, for example at different times of the day (daytime/nighttime) or when they are used at different locations (middle of a room or close to a wall or ventilation unit of the lab). By arranging the capillary within a housing that is provided with thermal insulation, the influence of the temperature of the direct environment of the capillary on the flow rate of the flow through that capillary is decreased. Furthermore, by providing a heater and/or a cooler within said housing, the temperature of the capillary can be controlled more directly, which makes that the desired flow rate of the fluid flow can be obtained rapidly.

In an advantageous embodiment, the capillary unit is at least partly accommodated in a cassette, so that it can be easily connected to other elements of a reaction system, such as a fluid source and/or a reactor. It is possible that the entire capillary unit is enclosed in the cassette, but it is also possible that for example the flow sensor is arranged outside of the cassette.

In an advantageous embodiment, the heater comprises a wire having an electrical resistance, which wire is wound around the capillary for supplying heat to said capillary.

In an advantageous embodiment, the capillary is arranged, for example wound, around a core, which core is provided with heating and/or cooling means.

The reaction system according to the invention can be used for gases, liquids, gels, and/or combinations thereof. It is in particular suitable to be used for controlling flows having small flow rates, such as between 1 microliters and 2 ml per minute for the secondary fluid flow if the fluid is a liquid, or less then 100Nml per minute, often less then 50 Nml per minute if the fluid is a gas.

The reaction system according to the invention comprises a manifold, which manifold has a manifold inlet for receiving the primary fluid flow, and a plurality of manifold outlets for releasing the plurality of secondary fluid flows. The reaction system further comprises a plurality of capillary units, each of the capillary units comprising a unit inlet for receiving a secondary fluid flow from a manifold outlet, a unit outlet for releasing said secondary fluid flow, a capillary, which capillary is arranged between the unit inlet and the unit outlet such that said secondary fluid flow passes through the capillary, a heater and/or a cooler for adjusting the temperature of the capillary and therewith influencing the flow rate of the secondary fluid flow passing through said capillary and a housing for accommodating at least the capillary and heater and/or cooler of said capillary unit, which housing provides thermal insulation of the capillary. The capillary unit further comprises a flow sensor that is adapted to measure the flow rate of the fluid flow through the capillary unit. The reaction system further comprises a flow adjustment unit for adjusting the flow rates of the secondary fluid flows, which flow adjustment unit comprises a temperature control device for individually controlling each of the heaters and/or coolers of the capillary units.

In the reaction system, the flow rate of each secondary fluid flow is measured by a flow sensor, and based on the measured flow rate, the temperature control unit makes that the heater and/or cooler in the housing of capillary unit to which the measured flow rate pertains heat or cool the capillary in that housing. By changing the capillary temperature, the flow rate of the fluid flow through the capillary is adjusted.

The thermally insulated housing of the capillary of each capillary unit prevents that the temperature of one capillary influences the temperature of an other capillary that is arranged nearby. This allows accurate control of the temperature of each individual capillary, and therewith accurate control of the flow rate of each individual second fluid flow. As well, by arranging the capillary within a housing that is provided with thermal insulation, the influence of the temperature of the direct environment of the capillary on the flow rate of the flow through that capillary is decreased. Furthermore, by providing a heater and/or a cooler within said housing, the temperature of the capillary can be controlled more directly, which makes that the desired flow rate of the fluid flow can be obtained rapidly.

The reaction system according to the invention is suitable for obtaining a distribution of the primary fluid flow into secondary fluid flows which have equal flow rates. However, it is also possible to obtain any other desired distribution of flow rates of the secondary fluid flows.

In an advantageous embodiment at least one unit outlet is connected to a reaction vessel. This way, the fluid flow supplied to that reaction vessel can be controlled.

In an advantageous embodiment, one or more capillary units are accommodated in a cassette. Each cassette can contain one or more capillary units.

In an advantageous embodiment, the heater comprises a wire having an electrical resistance, which wire is wound around the capillary for supplying heat to said capillary.

In an advantageous embodiment, the capillary is arranged, preferably wound, around a core, which core is provided with heating and/or cooling means.

In a particularly advantageous embodiment, the reaction system further comprises an auxiliary channel, which has a resistance to fluid flow that is considerably lower than the resistance to fluid flow in the secondary channels. The auxiliary channel is connected to the manifold, which has the effect that the main part of the fluid that enters the manifold leaves the manifold via the auxiliary channel. The auxiliary channel can for example take the fluid back to the source from which it came before entering the manifold inlet, to waste or to a separate discharge.

The effect of the auxiliary channel is that, especially as long as the pressure at the manifold inlet is kept steady, a change in flow rate through one of the capillary units does not or hardly not influence the flow rate through the other capillary units.

In an advantageous embodiment, the reaction system further comprises a reaction block for accommodating the reaction vessels, and/or one or more cassettes, each cassette accommodating at least one of the plurality of capillary units of the flow splitter and an enclosure or a frame for receiving at least the reaction block and the one or more cassettes.

In an advantageous embodiment, the reactors are flow through reactors.

In the reaction system described above, the primary fluid flow is split into a plurality of secondary fluid flows, and each of these secondary fluid flows is supplied to a reaction vessel. The flow rates of the secondary fluid flows are controlled by the capillary units. However, the capillary units can also be used in reaction systems with a different set-up and/or be arranged at other locations in the reaction system. Some of those reaction systems will be described below.

As an example of a reaction system with a different set-up, the invention further pertains to a reaction system for performing parallel experiments, wherein the fluids come from different fluid sources. The fluid sources can for example supply different fluids and/or fluids at a different pressure. This reaction system comprises a first fluid supply unit for supplying a first primary fluid flow at a first pressure, and a second fluid supply unit for supplying a second primary fluid flow at a second pressure. Further it comprises a first capillary unit, which is a capillary unit of the same kind as used in the reaction system according to claim 1, which first capillary unit is adapted to receive the first primary fluid flow from the first fluid supply unit. There is also a second capillary unit, which is a capillary unit of the same kind as used in the reaction system according to claim 1, which second capillary unit is adapted to receive the second primary fluid flow from the second fluid supply unit. Furthermore, there is provided a first reactor, which is in fluid communication with the first capillary unit and a second reactor, which is in fluid communication with the second capillary unit. The first capillary unit comprises a flow adjustment unit that is adapted to adjust the flow rate of the first primary fluid flow through the first capillary unit. The second capillary unit comprises a flow adjustment unit that is adapted to adjust the flow rate of the second primary fluid flow through the second capillary unit such that a predetermined distribution of flow rates of the first and the second primary fluid flow is obtained.

It is possible that the flow adjustment unit of the first capillary unit and the flow adjustment unit of the second capillary unit are separate entities, but it is also possible that they are integrated into a single flow adjustment unit. They can be part of an overall reaction system control unit.

This reaction system is in particular suitable to obtain a first flow rate (of the first primary fluid flow) and a second flow rate (of the second primary fluid flow) that are in a predetermined proportion to each other, independent of the pressure. For example, despite different pressures, a first and second flow rate that are equal to each other can be obtained.

In an advantageous embodiment, the reaction system further comprises a reaction block for accommodating the reaction vessels, one or more cassettes, each cassette accommodating at least one of the plurality of capillary units of the flow splitter and an enclosure for receiving at least the reaction block and the one or more cassettes.

In an advantageous embodiment, the reactors are flow through reactors.

In a further different set-up, a capillary unit as used in the reaction system of claim 1 can also be used in a back pressure control system for controlling the pressure downstream of a reaction vessel outlet.

In that set-up, the invention provides a reaction system for performing experiments, which reaction system comprises:
- a reaction vessel, wherein said reaction vessel comprises at least one reaction vessel inlet, which reaction vessel inlet is connectable to a fluid supply unit for receiving a fluid flow,
   wherein each reaction vessel further comprises at least one reaction vessel outlet for releasing an effluent flow,
- a reaction vessel effluent line for receiving the effluent flow from the reaction vessel, which effluent line is in fluid communication with at least one reaction vessel outlet, which reaction vessel effluent line is provided with a aperture for releasing a pressure control flow,
- a back pressure control system comprising a capillary unit, which capillary unit comprises
   - a unit inlet for receiving the pressure control flow from the aperture in the reaction vessel effluent line,
   - a unit outlet for releasing said pressure control flow from the capillary unit,
   - a capillary, which capillary is arranged between the unit inlet and the unit outlet such that said pressure control flow passes through the capillary,
   - a heater and/or a cooler for adjusting the temperature of the capillary and therewith influencing the flow rate of pressure control flow passing through said capillary,
   - a housing for accommodating at least the capillary and heater and/or cooler of said capillary unit, which housing provides thermal insulation of the capillary,
   wherein the back pressure control system further comprises a flow adjustment unit for adjusting the flow rates of the pressure control flow,
   which flow adjustment unit comprises:
   - a flow sensor which is arranged to measure the flow rate of said pressure control flow,
   - a temperature control device for controlling the heater and/or cooler of the capillary unit.

In such a reaction system according to the invention the principle of the capillary unit as used in the reaction system is used in a back pressure control system for controlling the pressure in a reaction vessel. It is known that the pressure inside a reaction vessel can be controlled by controlling the pressure downstream of the reaction vessel, advantageously close to the reaction vessel outlet. In a reaction system having a backpressure controller according to the invention, the reaction vessel effluent line is provided with an aperture, through which a portion of the reaction vessel effluent can escape. The portion of the reaction vessel effluent that escapes is called the pressure control flow. By controlling the flow rate of the pressure control flow, the pressure just downstream of the reaction vessel can be controlled, and therewith the pressure in the vessel. The flow rate of each of the pressure control flows is controlled using the principle of the capillary unit as used in the reaction system.

In an advantageous embodiment, a reactor system for performing parallel experiments is provided. This reaction system comprises a plurality of reaction vessels, each of them being connected to an associated effluent line. Each of the effluent lines is provided with an aperture, for releasing a pressure control flow. The flow rate of each of the pressure control flows is controlled using the principle of the capillary unit as used in the reaction system.

In a special embodiment of the invention, a plurality of capillary units, the manifold and the flow adjustment unit are built together to form a flow splitter. Preferably, the components of the flow splitter are arranged together in a cassette that can easily be connected to other components of a reaction system, such as a fluid supply unit, a plurality of reaction vessels and a reaction system control system. Preferably, the flow splitter is designed in such a way that the capillary units are easily exchangeable, so suitable capillary units can be selected for different experiments.

The invention will be explained in more detail under referral to the drawing, in which non-limiting embodiments of the invention are shown. The drawing shows in:
Fig. 1: an embodiment of a capillary unit according to the invention,
Fig. 2: a further embodiment of a capillary unit as applied in the invention,
Fig. 3: a first embodiment of a reaction system according to the invention,
Fig. 4: a second embodiment of a reaction system according to the invention,
Fig. 5: a third embodiment of a reaction system according to the invention,
Fig. 6: a variant of the embodiment of a reaction system according to fig. 3.
Fig. 7: an embodiment of a flow splitter according to the invention,

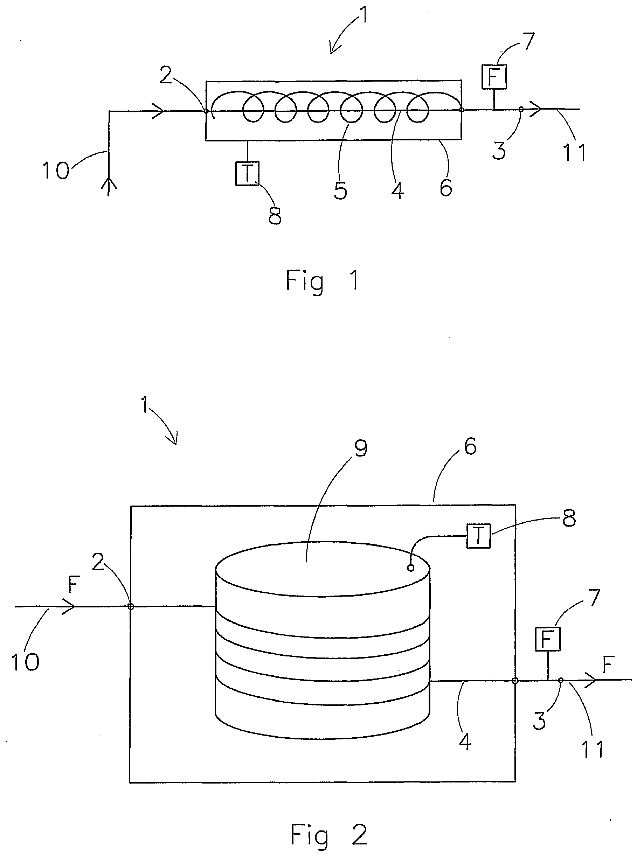

Fig. 1 shows an embodiment of a capillary unit according to the invention. In this embodiment, fluid is supplied to a capillary unit 1 by a supply line 10. The fluid, which can be a gas, a liquid or a combination thereof, enters the capillary unit by the capillary unit inlet 2. Through capillary 4, the fluid flows to capillary unit outlet 3, where it leaves the capillary unit. In this embodiment, the capillary 4 extends all the way from the capillary unit inlet 2 to the capillary unit outlet 3, but this is not necessary for its functioning. The fluid flows away from the capillary unit 1 by discharge line 11. Flow sensor 7 measures the flow rate of the fluid flow downstream of the capillary 4. The flow sensor 7 can be arranged either outside or inside the housing 6.

The capillary 4 is arranged in housing 6, which is provided with thermal insulation. Inside the housing a heater and/or cooler 5 is arranged. With this heater and/or cooler 5, the temperature of the capillary can be influenced. The thermal insulation of the housing 6 makes that the temperature of the capillary 4 can be controlled effectively and accurately, because the capillary is shielded from outside thermal influences. In addition, and in case the capillary heated, less heat leaks away from the capillary. The heater/cooler 5 is controlled by a temperature control device 8, which can be arranged inside the housing 6, outside the housing 6 or partially inside and partially outside the housing 6. For example, POM is a suitable material to be used for the thermal insulation, as it has good thermal insulating properties and is easy to process.

By changing the temperature of the capillary 4, the flow rate of the fluid flow through the capillary 4 also changes. This is due to a combination of effects. When the temperature of the capillary 4 rises, so does the temperature of the fluid in the capillary 4. This lowers the viscosity of the fluid and therewith the flow resistance that the fluid flow experiences in the capillary 4. Also, it makes the fluid expand in volume. Both effects make the flow rate downstream of the capillary 4 go up. It is also possible that thermal expansion changes the internal dimensions of the capillary 4, which also changes the flow resistance of the capillary 4.

Often, the flow rate of the fluid flow through the capillary 4 goes up when the temperature of the capillary 4 is increased. However, what happens in practice is the result of the balance of the effects mentioned above. In different situations, different effects will be more important or less important in their contribution to the overall effect. For example, for a gas, generally the thermal expansion has a more significant influence then for a liquid. If the same amount of molecules occupy a larger space, a higher volumetric flow rate is required to move the same amount of molecules through the capillary. So, if the volumetric flow rate is kept the same, the molecular flow rate will go down. On the other hand, of the molecular flow rate is kept the same, the volumetric flow rate will go up.

In a preferred embodiment, a desired flow rate is set by the flow adjustment unit. Preferably, around the desired flow rate, an accepted band width is determined. The flow sensor 7 then measures the flow rate of the fluid flow leaving the capillary 4. If the flow rate is within the accepted band width, the temperature of the capillary is not changed. If the flow rate is outside the accepted band width, the temperature control device comes into action. If the measured flow rate is lower than the lowest limit of the accepted band width, the temperature control device makes the heater 5 heat up the capillary, for example by raising the temperature by 0.5 °C. After a little while, when the system has had the time to react, the flow sensor 7 again measures the flow rate of the fluid flow. Then again it is determined whether the flow rate is within the accepted band width or not. If the flow rate is still too low, the temperature of the capillary is increased by another step of for example 0.5°C.

If the flow sensor 7 measures a flow rate that is higher than the highest limit of the accepted band width, the heater/cooler 5 is controlled by the temperature control device in such a way that the temperature of the capillary is reduced, for example by reducing the temperature by a step of 0.5°C. After a little while, when the system has had the time to react, the flow sensor 7 again measures the flow rate of the fluid flow. Then again it is determined whether the flow rate is within the accepted band width or not. If the flow rate is still too high, the temperature of the capillary is reduced by another step of for example 0.5°C.

This way, the desired flow rate is obtained by iterative, stepwise changes of the temperature of the capillary 4. As an alternative to this way of controlling the flow rate, for example a PID-control loop can be applied.

The heater/cooler 5 can be realised in many forms. In some embodiments, just a heater of just a cooler suffices. For example, if the capillary is always used at temperatures above room temperature, using only a heater can be fine. In those cases, if the flow rate of the flow through the capillary has to be decreased, the heater 5 just heats the capillary a little less. For example, if the capillary is operated at 80 °C and the flow rate is too high, the heater 5 is then set by the temperature control device to a temperature of 79.5 °C. If the capillary 4 always is cooled, the same principle is used and just a cooler can be applied to obtain the desired effect. So, the heater/cooler 5 can be either a heater or a cooler or a combination of a heater and a cooler.

The heater/cooler 5 can take many forms. It can be an electrical resistance wire, which produces heat when an electrical current flows through. Such a wire can for example be wound around the capillary. The housing 6 can be provided with a heater/cooler channel, through which channel a heated or cooled medium flows. Also, it is possible that the capillary 4 is wound around a core, which core is heated and/or cooled, and which core then in turn heats and/or cools the capillary 4. This is shown in fig. 2

Fig. 2 shows a further possible embodiment of a capillary unit 1. A supply line 10 supplies fluid flow F to the unit inlet 2, and then the fluid flows through capillary 4 to unit outlet 3, where it enters the discharge line 11. The capillary 4 is arranged in thermally insulated housing 6. In this embodiment, the capillary 4 is wound around a core 9. In the example of fig. 2, the core is cylindrical, but this is not necessary. The core 9 is provided with heating means and/or cooling means. For example, the core 9 can be provided with a channel that is or can be brought into fluid communication with an external source of a cooling and/or heating medium, such as water. In an other embodiment, the core can be provided with an electrical resistance wire or any other form of heat tracing.

The principle of the capillary unit as used in the reaction system can be used in many ways when performing chemical reactions.

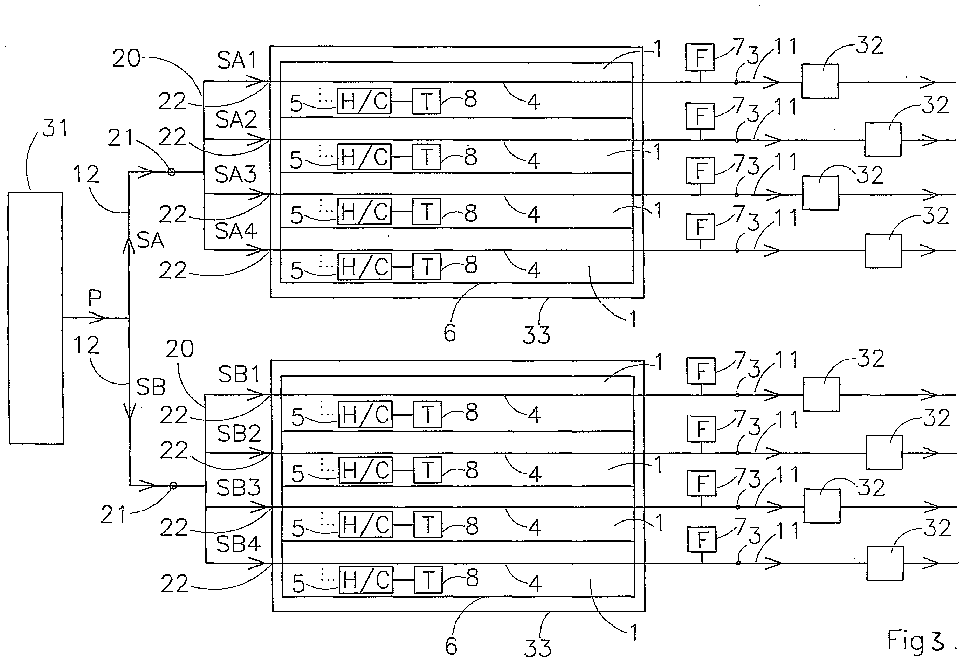

Fig. 3 shows a first embodiment of a reaction system according to the invention. This reaction system comprises a fluid supply unit 31 for supplying a primary fluid flow P. The reaction system further comprises in this example two manifolds 20, that each have four capillary units 1 connected to them. The skilled person will understand that any other number of manifolds and/or capillary units is also possible. Connection lines 12 connect the fluid supply unit 31 to the manifolds 20. The primary fluid flow P is first divided into flows SA and SB. The first flow splitter divides flow SA into secondary fluid flows SA1, SA2, SA3 and SA4. The second flow splitter divides flow SB into secondary fluid flows SB1, SB2, SB3 and SB4.

In the embodiment of fig. 3, the housings 6 of the capillary units 1 connected to the same manifold 20 are arranged together in a cassette 33. This allows easy mounting into a reaction system setup, for example in a rack. It also allows a fast exchange of sets of capillary units and an easy connection to other parts of the reaction system, for example if quick catch couplings are used for connecting different flow lines to each other, for example the connection line 12 to the manifold inlets 21. Preferably, the cassette is also provided with electric connectors for connecting electric feed lines and/or data transport lines. The cassette itself can be thermally insulated, but this is not necessary. In this embodiment, it is advantageous if the reaction vessels 32 are arranged in a reaction block that can be arranged in the rack as well.

It is possible, although not shown in the drawing, that the manifold 20 is arranged inside the cassette as well.

Preferably, the capillary units of in a cassette are easily exchangeable, for example because capillary units of different flow resistance rates have the same dimensions and the provisions for mounting them in the cassette (e.g. holes for receiving bolts, or quick catch or snap connections) are in the same location.

In the reaction system of fig. 3, a plurality of reaction vessels 32 is present. To each capillary unit outlet 3, a reaction vessel 32 is connected. The flow splitters 30 provide the distribution of the primary fluid flow over the individual reactors with the secondary fluid flows having the desired relative proportions in respect of the flow rates. For example, a flow rate distribution could be that the flow rate of flows SA1, SA2, SA3 and SA4 is twice the flow rate of flows SB1, SB2, SB3 and SB4, while the flow rates of flows SA1, SA2, SA3 and SA4 are equal to one another and the flow rates of flows SB1, SB2, SB3 and SB4 are equal to one another as well.

The control of the flow rates of the individual secondary fluid flows SA1, SA2, SA3, SA4, SB1, SB2, SB3 and SB4 takes place in the same way as described above in relation to the flow splitter according to the invention.

In general, if the primary fluid flow has a constant flow rate and the flow rate of one of the secondary fluid flows is changed, then the flow rates of the other secondary fluid flows will change somewhat too. This means that in general, obtaining the desired relative proportions of the flow rates of the secondary fluid flows, that is: the desired distribution of the primary fluid flow over the secondary fluid flows, will require some iterations. It is however also possible that the flow rate of the primary fluid flow is allowed to vary. In that case for example, it will usually be easier to obtain the desired relative proportions of the flow rates of the secondary fluid flows. In such a case, the pressure in the fluid supply unit may be kept constant while the flow rate of the primary fluid flow is allowed to vary.

The capillary units in the reaction system according to the invention can also be used to maintain a controlled flow rate distribution over the reaction vessels in case of a pressure increase or pressure drop in the course of an experiment. This can be illustrated by the following example:
In a reaction system according to the invention, there are eight reaction vessels, which are fed by a fluid supply unit with isopropanol in liquid form at a pressure of 45 barg. The pressure for each of the eight reaction vessels is set at 20 barg, so for each fluid path from the fluid supply unit to the reactor outlet, the pressure drop is 25 barg. The capillary units are all tuned to each deliver a flow of liquid isopropanol of 10 microliter per minute to its associated reaction vessel.

During the course of the experiment, for one reason or the other, the pressure in one of the reactors drops to 15 barg, so that the pressure drop from the fluid supply unit to the outlet of that reactor increases form 25 barg to 30 barg. If nothing would be done, this would cause the flow rate to that reaction vessel to increase by 20% to 12 microliter per minute. However, if the temperature of the capillary in the capillary unit connected to that particular reaction vessel would be made to drop, the viscosity of the isopropanol would increase and the flow rate would decrease. In this example, the applicant in his experiments found that a temperature drop of about 6°C brings the flow rate back to the desired 10 microliter per minute.

On the other hand, if the pressure in one of the reaction vessels would increase to 30 barg, the pressure drop would be reduced to 15 barg. If nothing would be done, this would cause the flow rate through that reactor to drop to 6 microliter per minute. However, by heating the capillary of the capillary unit associated with this reaction vessel, the viscosity of the fluid would decrease and the flow rate increase. In this example, the applicant in his experiments found that a temperature increase of about 17°C brings the flow rate back to the desired 10 microliter per minute.

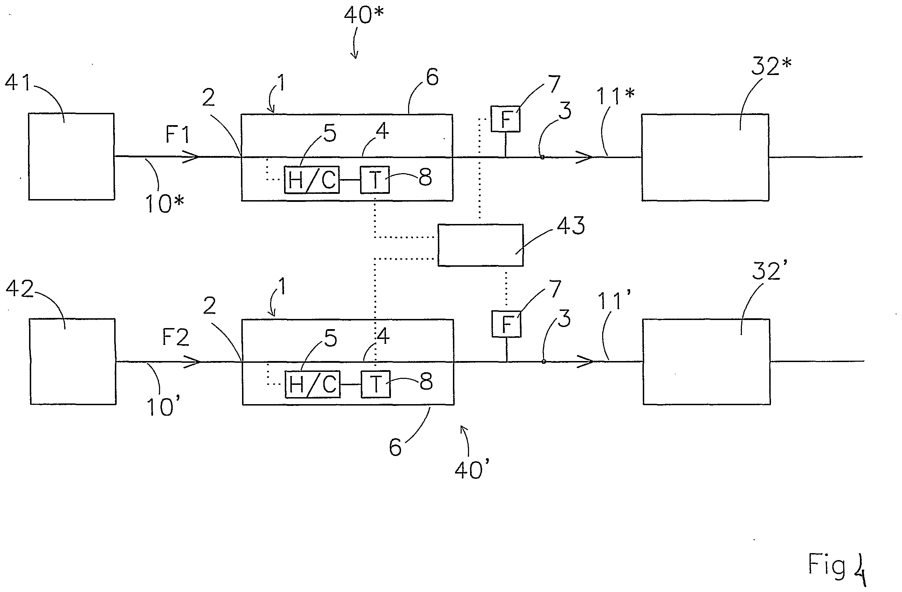

Fig. 4 shows a second embodiment of a reaction system according to the invention. In this embodiment, the reaction system comprises a first fluid supply unit 41 and a second fluid supply unit 42. The first fluid supply unit 41 delivers a first primary fluid flow F1 at a first pressure p1. The second fluid supply unit 42 delivers a second primary fluid flow F2 at a second pressure p2. It is possible that p1 is equal to p2, but the system is in particular suitable for situations in which p1 and p2 are different. It is also suitable for a system in which parallel reactions are carried out using different fluids.

Downstream of first fluid supply unit 41, first capillary unit 40* is arranged. First capillary unit 40* is a capillary unit according to the invention, for example a first capillary unit according to fig. 1. The first fluid supply unit 41 is connected to first capillary unit 40* by supply line 10*. Downstream of the first capillary unit 40*, discharge line 11* is arranged for supplying first fluid flow F1 to first reactor 32*. In this example, reactor 32* is a flow through reactor.

Downstream of second fluid supply unit 42, second capillary unit 40' is arranged. Second capillary unit 40' is a capillary unit according to the invention, for example a capillary unit according to fig. 1. The second fluid supply unit 42 is connected to second capillary unit 40' by supply line 10'. Downstream of the second capillary unit 40', discharge line 11' is arranged for supplying second fluid flow F1 to second reactor 32'. In this example, reactor 32' is a flow through reactor.

The reaction system of fig. 4 further comprises a flow distribution controller 43 for ensuring that the flow rates of the first primary fluid flow F1 and the second primary fluid flow F2 are in a desired proportion relative to each other, for example that the flow rate is the same for both primary fluid flows.

The function of the flow distribution controller is to make sure that the flow rates of the first and second primary fluid flows F1, F2 are in the desired proportion relative to each other (for example flow rate F1: flow rate F2 = 1:1 or 1:2). To that end, the flow distribution controller receives the measured flow rates from both flow sensors 7. It compares the flow rates of the individual primary fluid flows with each other, and determines whether the flow rates are in the desired proportion to each other. If this is not the case, then the flow distribution controller activates one or more of the individual temperature control devices 8 to adjust the flow rate of the associated primary fluid flow.

With this embodiment of the invention, it is possible to for example carry out parallel reactions at different pressures or with different fluids, but at the same flow rate.

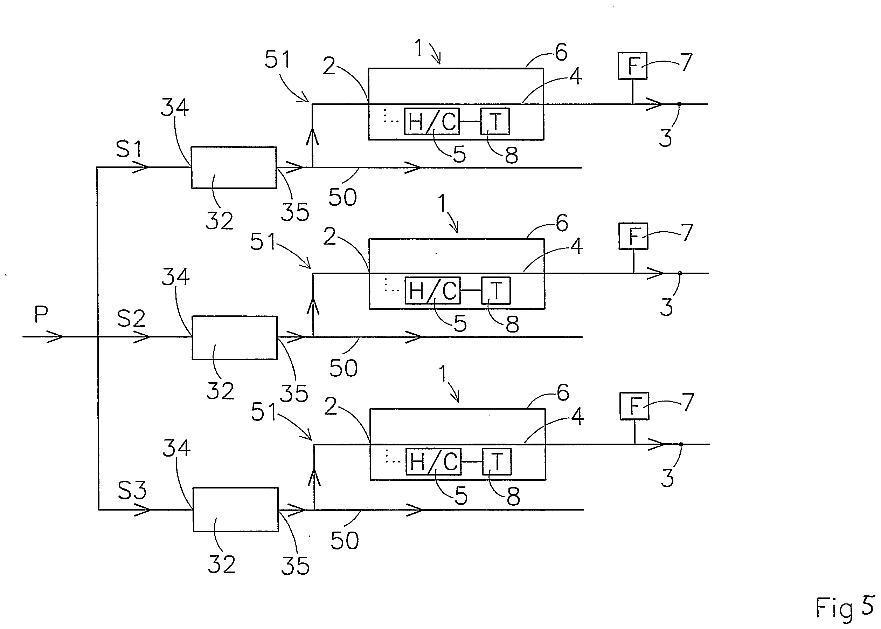

Fig. 5 shows a third embodiment of a reaction system according to the invention. In this embodiment, capillary units according to the invention are used as part of a back pressure control system.

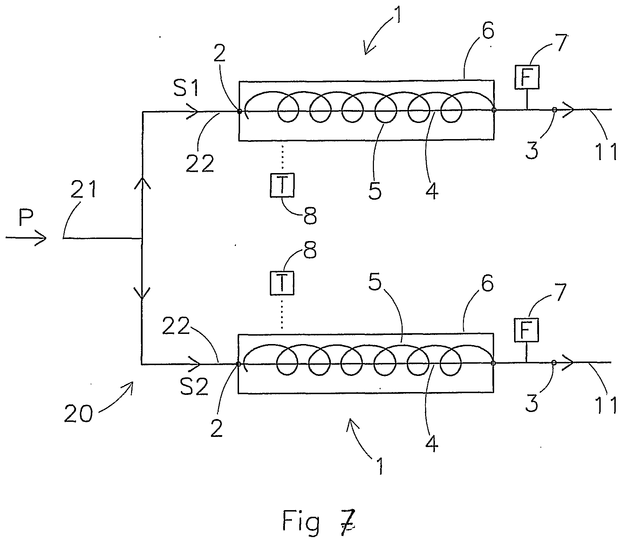

In the reaction system according to fig. 5, a plurality of reaction vessels 32 is provided. Each reaction vessel 32 is provided with at least one reaction vessel inlet 34 and at least one reaction vessel outlet 35. A primary fluid flow P is supplied to the system, which is then in this example split up into secondary fluid flows S1, S2 and S3. For this flow splitting, a flow splitter according to the invention, for example a flow splitter according to fig. 7, can be used, but this is not necessary. In the reaction system of fig. 5, each of the reaction vessels 32 is provided with a reaction vessel effluent line 50 for discharging the reaction effluent from that particular reaction vessel 32. The reaction vessel effluent line 50 is connected to the reaction vessel outlet 35 of the associated reaction vessel 32.

In the reaction system according to fig. 5 the principle of the capillary unit according to the invention is used in a back pressure control system for controlling the pressure in the reaction vessels 32. It is known that the pressure inside a reaction vessel can be controlled by controlling the pressure downstream of that reaction vessel, advantageously close to the reaction vessel outlet.

To that end, each of the reaction vessel effluent lines 50 is provided with an aperture, through which a portion of the reaction vessel effluent can escape. The portion of the reaction vessel effluent that escapes is called the pressure control flow. By controlling the flow rate of the pressure control flow, the pressure just downstream of the reaction vessel can be controlled, and therewith the pressure in the vessel. If for example the pressure has to be reduced in order to obtain the desired pressure in the reaction vessel, the flow rate of the pressure control flow has to be increased. In the reaction system of fig. 5, a capillary unit according to the invention is used for controlling the flow rate of the pressure control flow, and therewith the pressure in the associated reactor 32.

In fig. 5, a plurality of reaction vessels 32 is provided. However, a back pressure control system like the one of fig. 5 can also be used in combination with a single reaction vessel.

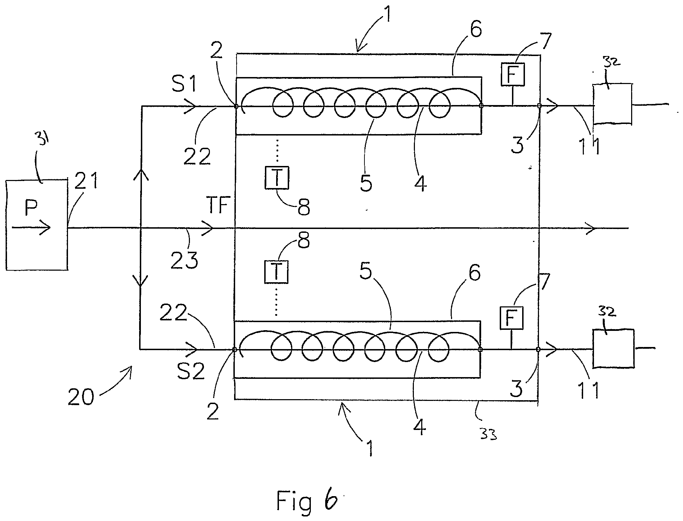

Fig. 6 shows a variant of the embodiment of a reaction system according to fig. 3. In this variant, auxiliary channel 23 is provided, through which a tertiary fluid flow TF can pass. The resistance to fluid flow of the auxiliary channel is much less then the resistance to fluid flow in the capillaries of the capillary units 1. As a result of that, most of the primary fluid flow P leaves reaction system via the auxiliary channel 23.

Due to this, a change in resistance to fluid flow in one of the capillaries 4 of the capillary units 1 has far less effect on the flow rate of the fluid flow through the other capillaries in the reaction system.

As an example, say that in the reaction system of fig. 3 the primary fluid flow is 10 microliter per minute, the secondary fluid flow through the first capillary unit is 6 microliter per minute and the secondary fluid flow through the second capillary unit is 4 microliter per minute. Then, the capillary of the second capillary unit is heated, and the flow rate through the second capillary unit changes to 4.5 microliter per minute. If the flow rate of the primary fluid flow is kept constant, the fluid flow through the first capillary unit as a consequence changes to 5.5 microliter per minute.

For comparison, if in the reaction system of fig. 6 the primary fluid flow is 10 microliter per minute, the tertiary fluid flow through the auxiliary channel 23 is 8 microliter per minute, the secondary fluid flow through the first capillary unit is 1 microliter per minute and the secondary fluid flow through the second capillary unit is also 1 microliter per minute. Then, the capillary of the second capillary unit is heated, and the flow rate through the second capillary unit changes to 1.5 microliter per minute. If the flow rate of the primary fluid flow is kept constant, the fluid flow through the auxiliary channel as a consequence changes to 7.56 microliter per minute and the fluid flow through the first capillary unit as a consequence changes to 0.94 microliter per minute.

The flow rate values and ratios as mentioned above are merely an example to illustrate the effect of the auxiliary channel. In general, the flow rate through the auxiliary channel can be for example 10 to 50 to 100 times, or even more, than the flow rate through each of the capillaries.

In a typical embodiment, it could be that 90% of the fluid of the primary fluid flow goes through the auxiliary channel, while only 10% is distributed over the capillary units. If there are 16 capillary units in the reaction system, and the desired flow rates are set such that there is an equal distribution of the fluid flow over the capillary units, each capillary unit only receives 0,625% of the fluid of the primary fluid flow.

The auxiliary channel can take the fluid back to the source from which it came before entering the manifold inlet, to waste or to a separate discharge.

An auxiliary channel of the type as shown in fig. 6 can be used in combination with any of the reaction systems according to the invention.

The skilled person will understand that features of the embodiments of the reaction systems according to the invention as described above can be interchanged and/or combined with each other.

Fig. 7 shows an embodiment of a flow splitter according to the invention. In this flow splitter, the same principle is used as in the capillary unit according to fig. 1.

In the flow splitter of fig. 7, a primary flow P of fluid is supplied to a manifold inlet 21 of a manifold 20. In. the manifold 20, primary fluid flow P is divided over two secondary fluid flows S1,S2. After passing through the flow splitter, each secondary fluid flow S1,S2 will be directed to a device in which it is used, such as a reaction vessel. In the example of fig. 7, the secondary fluid flows S1,S2 can be supplied to two parallel reaction vessels for performing parallel chemical tests. It is possible of course that the manifold has more than two manifold outlets, so that more than two secondary flows are created. This does however not alter the technical principle of the flow splitter.

When parallel tests are carried out, it is often desired that the secondary fluid flows have flow rates that are in a predetermined proportion to each other. For example, the flow rates of all fluid flows are desired to be equal, or the flow rate of S1 has to be twice the flow rate of S2. This can be achieved with the flow splitter according to the invention.

The flow splitter of fig. 7 comprises two capillary units 1, which are similar to the capillary unit according to fig. 1. Each capillary unit 1 of the flow splitter receives a secondary fluid flow from an associated manifold outlet 22 at capillary unit inlet 2. In the capillary unit 1, the secondary fluid flows are adjusted in the same way as the fluid flow through the capillary in to fig. 1. So, the flow rate of each secondary fluid flow is measured by a flow sensor 7, and based on the measured flow rate, the temperature control unit 8 makes that the heater and/or cooler 5 in the housing 6 of capillary unit 1 to which the measured flow rate pertains heat or cool the capillary 4 in that housing 6. By changing the capillary temperature, the flow rate of the fluid flow through the capillary is adjusted.

The thermally insulated housing 6 of the capillary 4 of each capillary unit 1 prevents that the temperature of one capillary 4 influences the temperature of an other capillary 4 that is arranged nearby. Also, other thermal influences from the environment are reduced, as well as heat loss to the environment from the heater/cooler 5. This allows accurate control of the temperature of each individual capillary 4, and therewith accurate control of the flow rate of each individual second fluid flow.

The flow sensor 7 and the temperature control device 8 related to each capillary unit 1 form part of the flow adjustment unit for the associated secondary fluid flow. With this flow rate adjustment unit, each the flow rate of each secondary fluid flow can be controlled individually. In an advantageous embodiment, the flow splitter further comprises a flow distribution controller, which communicates with the individual flow adjustment units (preferably directly with the temperature control devices of the individual flow adjustment devices) of the flow splitter.

The function of the flow distribution controller is to make sure that the flow rates of the secondary fluid flows are in the desired proportion relative to each other (for example: first secondary flow rate: second secondary flow rate: third secondary flow rate: fourth secondary flow rate = 1:1:1:1 or 1:2:3:4). To that end, the flow distribution controller receives the measured flow rates from all flow sensors 7 of the flow splitter. It compares the flow rates of the individual secondary fluid flows with each other, and determines whether the flow rates are in the desired proportions to each other. If this is not the case, then the flow distribution controller activates one or more of the individual flow adjusting units, preferably directly the temperature control devices, to adjust the flow rate of the associated secondary fluid flow.

In general, if the primary fluid flow has a constant flow rate and the flow rate of one of the secondary fluid flows is changed, then the flow rates of the other secondary fluid flows will change somewhat too. This means that in general, obtaining the desired relative proportions of the flow rates of the secondary fluid flows, that is: the desired distribution of the primary fluid flow over the secondary fluid flows, will require some iterations. It is however also possible that the flow rate of the primary fluid flow is allowed to vary. In that case, it will usually be easier to obtain the desired relative proportions of the flow rates of the secondary fluid flows. In such a case for example, the pressure in the fluid supply unit may be kept constant while the flow rate of the primary fluid flow is allowed to vary.

Preferably, the components of the flow splitter are arranged in a cassette, so that the flow splitter can be attached to other components of the system in which it is used in an easy way.

Preferably, the capillary units are releasably arranged in the cassette so that they can easily be exchanged for other capillary units, for example capillary units with a different range of resistance to fluid flow.

The skilled person will understand that features of the embodiments of the reaction systems according to the invention and features of embodiments of the flow splitter according to the invention as described above can be interchanged and/or combined with each other, as defined by the appended claims.

## Claims

1. Flow splitter for splitting a primary fluid flow into a plurality of secondary fluid flows for performing experiments,
which flow splitter comprises:
- a manifold, which manifold has a manifold inlet for receiving the primary fluid flow, and a plurality of manifold outlets for releasing the plurality of secondary fluid flows,
- a plurality of capillary units, each of the capillary units comprising:
- a unit inlet for receiving a secondary fluid flow from a manifold outlet,
- a unit outlet for releasing said secondary fluid flow,
- a capillary, which capillary is arranged between the unit inlet and the unit outlet such that said secondary fluid flow passes through the capillary,
- a heater and/or a cooler for adjusting the temperature of the capillary and therewith influencing the flow rate of the secondary fluid flow passing through said capillary,
- a housing for accommodating at least the capillary and heater and/or cooler of said capillary unit, which housing provides thermal insulation of the capillary,
- a flow sensor for measuring the flow rate of the secondary fluid flow through the capillary unit, which flow sensor can be arranged either inside or outside the housing,
- a flow adjustment unit for adjusting the flow rates of the secondary fluid flows, which flow adjustment unit comprises a temperature control device for individually controlling the heater and/or cooler of each capillary unit in response to the flow rate that is measured by the flow sensor of that capillary unit,
wherein the capillary in the housing of each capillary unit has been prepared beforehand and the resistance to fluid flow of the capillary at a reference temperature and with a fluid of a known viscosity has been measured and is known; and
wherein the capillary units are exchangeable.

2. Flow splitter according to claim 1,
wherein the flow splitter comprises a cassette for accommodating the components of the flow splitter, in which cassette the capillary units are releasably arranged such that they can be exchanged.

3. Reaction system for performing parallel experiments,
which reaction system comprises:
- a fluid supply unit for supplying a primary fluid flow,
- a flow splitter according to claim 1, wherein the manifold inlet is connected to the fluid supply unit for receiving the primary fluid flow from the fluid supply unit,
- a plurality of reaction vessels, wherein each reaction vessel comprises at least one reaction vessel inlet, wherein a reaction vessel inlet of each reaction vessel is connected to an associated capillary unit outlet for receiving a secondary fluid flow from the flow splitter.

4. The reaction system according to claim 3, wherein the reaction system
comprises a reaction block for accommodating the reaction vessels and/or one or more cassettes, each cassette accommodating at least one of the plurality of capillary units of the flow splitter, and an enclosure or a frame for receiving at least the reaction block and the one or more cassettes.

5. The reaction system according to claim 3, wherein the reaction system
comprises a flow distribution controller for ensuring that the flow rates of the first primary fluid flow and the second primary fluid flow are in a desired proportion relative to each other.

6. The reaction system according to claim 3,
wherein the heater and/or cooler is a heater comprising an electrical resistance wire, which wire produces heat when an electrical current flows through, and which wire is wound around the capillary.

7. The reaction system according to claim 3,
wherein the capillary is wound around a core, which core is provided with heating and/or cooling means.

8. The reaction system according to claim 3,
wherein the reaction system comprises an auxiliary channel that is connected to the manifold, which auxiliary channel has a resistance to fluid flow that is lower than the resistance to fluid flow of the capillaries of the capillary units.

9. Reaction system for performing experiments,
which reaction system comprises:
- a reaction vessel, wherein said reaction vessel comprises at least one reaction vessel inlet, which reaction vessel inlet is connectable to a fluid supply unit for receiving a fluid flow,
wherein each reaction vessel further comprises at least one reaction vessel outlet for releasing an effluent flow,
- a reaction vessel effluent line for receiving the effluent flow from the reaction vessel, which effluent line is in fluid communication with at least one reaction vessel outlet, which reaction vessel effluent line is provided with a aperture for releasing a pressure control flow,
- a back pressure control system comprising a capillary unit, which capillary unit comprises
- a unit inlet for receiving the pressure control flow from the aperture in the reaction vessel effluent line,
- a unit outlet for releasing said pressure control flow from the capillary unit,
- a capillary, which capillary is arranged between the unit inlet and the unit outlet such that said pressure control flow passes through the capillary,
- a heater and/or a cooler for adjusting the temperature of the capillary and therewith influencing the flow rate of pressure control flow passing through said capillary,
- a housing for accommodating at least the capillary and heater and/or cooler of said capillary unit, which housing provides thermal insulation of the capillary,
- a flow sensor which is adapted to measure the flow rate of the pressure control flow through the capillary unit,
wherein the back pressure control system further comprises a flow adjustment unit for adjusting the flow rates of the pressure control flow,
which flow adjustment unit comprise a temperature control device for controlling the heater and/or cooler of the capillary unit
wherein the capillary in the housing of each capillary unit has been prepared beforehand and the resistance to fluid flow of the capillary at a reference temperature and with a fluid of a known viscosity has been measured and is known; and
wherein the capillary unit is exchangeable.

## Patentansprüche

1. Strömungsteiler zum Teilen eines primären Fluidstroms in eine Mehrzahl von sekundären Fluidströmen zur Durchführung von Experimenten,
wobei der Strömungsteiler umfasst:
- einen Verteiler, welcher Verteiler einen Verteilereinlass zur Aufnahme des primären Fluidstroms aufweist, und eine Mehrzahl von Verteilerauslässen zur Ausgabe der Mehrzahl von sekundären Fluidströmen,
- eine Mehrzahl von Kapillareinheiten, wobei jede der Kapillareinheiten umfasst:
∘ einen Einheitseinlass zur Aufnahme eines sekundären Fluidstroms aus einem Verteilerauslass,
∘ einen Einheitsauslass zur Ausgabe des sekundären Fluidstroms,
∘ eine Kapillare, welche Kapillare zwischen dem Einheitseinlass und dem Einheitsauslass angeordnet ist, so dass der sekundäre Fluidstrom durch die Kapillare verläuft,
∘ eine Heizvorrichtung und/oder eine Kühlvorrichtung zum Anpassen der Temperatur der Kapillare und somit zum Beeinflussen der Durchflussmenge des sekundären Fluidstroms, der durch die Kapillare verläuft,
∘ ein Gehäuse zum Aufnehmen von wenigstens der Kapillare und der Heizvorrichtung und/oder Kühlvorrichtung der Kapillareinheit, welches Gehäuse eine Wärmedämmung der Kapillare bereitstellt,
∘ einen Strömungssensor zum Messen der Durchflussmenge des sekundären Fluidstroms durch die Kapillareinheit, welcher Strömungssensor entweder innerhalb oder außerhalb des Gehäuses angeordnet sein kann,
- eine Strömungsanpassungseinheit zum Anpassen der Durchflussmengen der sekundären Fluidströme, welche Strömungsanpassungseinheit eine Temperatursteuerungsvorrichtung zum individuellen Steuern der Heizvorrichtung und/oder der Kühlvorrichtung einer jeden Kapillareinheit ansprechend auf die Durchflussmenge umfasst, die von dem Strömungssensor dieser Kapillareinheit gemessen wird,
wobei die Kapillare in dem Gehäuse einer jeden Kapillareinheit vorab vorbereitet wurde, und der Fluidströmungswiderstand der Kapillare bei einer Referenztemperatur und mit einem Fluid einer bekannten Viskosität gemessen wurde und bekannt ist; und
wobei die Kapillareinheiten austauschbar sind.

2. Strömungsteiler nach Anspruch 1,
wobei der Strömungsteiler eine Kassette zum Aufnehmen der Komponenten des Strömungsteilers umfasst, in welcher Kassette die Kapillareinheiten lösbar angeordnet sind, so dass sie ausgetauscht werden können.

3. Reaktionssystem zum Durchführen von parallelen Experimenten,
wobei das Reaktionssystem umfasst:
- eine Fluidzufuhreinheit zum Zuführen eines primären Fluidstroms,
- einen Strömungsteiler nach Anspruch 1, wobei der Verteilereinlass mit der Fluidzufuhreinheit zur Aufnahme des primären Fluidstroms von der Fluidzufuhreinheit verbunden ist,
- eine Mehrzahl von Reaktionsbehältern, wobei jeder Reaktionsbehälter wenigstens einen Reaktionsbehältereinlass umfasst, wobei ein Reaktionsbehältereinlass eines jeden Reaktionsbehälters mit einem zugehörigen Kapillareinheitsauslass zur Aufnahme eines sekundären Fluidstroms aus dem Strömungsteiler verbunden ist.

4. Reaktionssystem nach Anspruch 3, wobei das Reaktionssystem einen Reaktionsblock zur Aufnahme der Reaktionsbehälter und/oder eine oder mehrere Kassetten umfasst, wobei jede Kassette wenigstens eine der Mehrzahl von Kapillareinheiten des Strömungsteilers aufnimmt, und eine Umhausung oder einen Rahmen zur Aufnahme von wenigstens dem Reaktionsblock und der einen oder der mehreren Kassetten.

5. Reaktionssystem nach Anspruch 3, wobei das Reaktionssystem eine Strömungsverteilungssteuerung umfasst, um sicherzustellen, dass die Durchflussmengen des ersten primären Fluidstroms und des zweiten primären Fluidstroms in einer erwünschten Proportion relativ zueinander sind.

6. Reaktionssystem nach Anspruch 3,
wobei die Heizvorrichtung und/oder Kühlvorrichtung eine Heizvorrichtung ist, die einen elektrischen Widerstandsdraht umfasst, welcher Draht Wärme erzeugt, wenn ein elektrischer Strom hindurch verläuft, und welcher Draht um die Kapillare gewickelt ist.

7. Reaktionssystem nach Anspruch 3,
wobei die Kapillare um einen Kern gewickelt ist, welcher Kern mit Heiz- und/oder Kühlmitteln versehen ist.

8. Reaktionssystem nach Anspruch 3,
wobei das Reaktionssystem einen Hilfskanal umfasst, der mit dem Verteiler verbunden ist, welcher Hilfskanal einen Widerstand gegen einen Fluidstrom aufweist, der geringer ist als der Widerstand gegen einen Fluidstrom der Kapillaren der Kapillareinheiten.

9. Reaktionssystem zum Durchführen von Experimenten,
wobei das Reaktionssystem umfasst:
- einen Reaktionsbehälter, wobei der Reaktionsbehälter wenigstens einen Reaktionsbehältereinlass umfasst, welcher Reaktionsbehältereinlass mit einer Fluidzufuhreinheit zur Aufnahme eines Fluidstroms verbindbar ist, wobei jeder Reaktionsbehälter ferner wenigstens einen Reaktionsbehälterauslass zum Ausgeben eines ausströmenden Stroms umfasst,
- eine Reaktionsbehälter-Ausströmleitung zur Aufnahme des ausströmenden Stroms aus dem Reaktionsbehälter, welche Ausströmleitung in Fluidkommunikation mit wenigstens einem Reaktionsbehälterauslass steht, welche Reaktionsbehälter-Ausströmleitung mit einer Öffnung zum Ausgeben eines Drucksteuerungsstroms versehen ist,
- ein Gegendruck-Steuerungssystem, das eine Kapillareinheit umfasst, welche Kapillareinheit umfasst:
∘ einen Einheitseinlass zur Aufnahme des Drucksteuerungsstroms aus der Öffnung in der Reaktionsbehälter-Ausströmleitung,
∘ einen Einheitsauslass zur Ausgabe des Drucksteuerungsstroms aus der Kapillareinheit,
∘ eine Kapillare, welche Kapillare zwischen dem Einheitseinlass und dem Einheitsauslass angeordnet ist, so dass der Drucksteuerungsstrom durch die Kapillare verläuft,
∘ eine Heizvorrichtung und/oder eine Kühlvorrichtung zum Anpassen der Temperatur der Kapillare und somit zum Beeinflussen der Durchflussmenge des Drucksteuerungsstroms, der durch die Kapillare verläuft,
∘ ein Gehäuse zum Aufnehmen von wenigstens der Kapillare und der Heizvorrichtung und/oder Kühlvorrichtung der Kapillareinheit, welches Gehäuse eine Wärmedämmung der Kapillare bereitstellt,
∘ einen Strömungssensor, der dazu angepasst ist, die Durchflussmenge des Drucksteuerungsstroms durch die Kapillareinheit zu messen,
wobei das Gegendruck-Steuerungssystem ferner eine Strömungsanpassungseinheit zum Anpassen der Durchflussmengen des Drucksteuerungsstroms umfasst,
wobei die Strömungsanpassungseinheit eine Temperatursteuerungsvorrichtung zum Steuern der Heizvorrichtung und/oder Kühlvorrichtung der Kapillareinheit umfasst,
wobei die Kapillare in dem Gehäuse einer jeden Kapillareinheit vorab vorbereitet wurde, und der Fluidströmungswiderstand der Kapillare bei einer Referenztemperatur und mit einem Fluid einer bekannten Viskosität gemessen wurde und bekannt ist; und
wobei die Kapillareinheit austauschbar ist.

## Revendications

1. Séparateur d'écoulement pour séparer un écoulement de fluide primaire en une pluralité d'écoulements de fluide secondaires pour conduire des expériences,
lequel séparateur d'écoulement comprend :
- un collecteur, lequel collecteur a une entrée de collecteur pour recevoir l'écoulement de fluide primaire et une pluralité de sorties de collecteur pour libérer la pluralité d'écoulements de fluide secondaires,
- une pluralité d'unités capillaires, chacune des unités capillaires comprenant :
- une entrée d'unité pour recevoir un écoulement de fluide secondaire provenant d'une sortie de collecteur,
- une sortie d'unité pour libérer ledit écoulement de fluide secondaire,
- un capillaire, lequel capillaire est agencé entre l'entrée d'unité et la sortie d'unité de telle sorte que ledit écoulement de fluide secondaire traverse le capillaire,
- un appareil de chauffage et/ou un appareil de refroidissement pour régler la température du capillaire et avec lequel influencer le débit de l'écoulement de fluide secondaire traversant ledit capillaire,
- un boîtier pour recevoir au moins le capillaire et l'appareil de chauffage et/ou l'appareil de refroidissement de ladite unité capillaire, lequel boîtier assure une isolation thermique du capillaire,
- un capteur de débit pour mesurer le débit de l'écoulement de fluide secondaire à travers l'unité capillaire, lequel capteur de débit peut être agencé soit à l'intérieur soit à l'extérieur du boîtier,
- une unité de réglage d'écoulement pour régler les débits des écoulements de fluide secondaires, laquelle unité de réglage d'écoulement comprend un dispositif de commande de température pour commander individuellement l'appareil de chauffage et/ou l'appareil de refroidissement de chaque unité capillaire en réponse au débit qui est mesuré par le capteur de débit de cette unité capillaire,
le capillaire dans le boîtier de chaque unité capillaire ayant été préparé au préalable et la résistance à l'écoulement de fluide du capillaire à une température de référence et avec un fluide d'une viscosité connue ayant été mesurée et étant connue ; et
les unités capillaires étant échangeables.

2. Séparateur d'écoulement selon la revendication 1,
le séparateur d'écoulement comprenant une cassette pour recevoir les composants du séparateur d'écoulement, dans laquelle cassette les unités capillaires sont agencées de façon libérable de telle sorte qu'elles peuvent être échangées.

3. Système de réaction pour conduire des expériences en parallèle,
lequel système de réaction comprend :
- une unité de distribution de fluide pour distribuer un écoulement de fluide primaire,
- un séparateur d'écoulement selon la revendication 1, dans lequel l'entrée de collecteur est reliée à l'unité de distribution de fluide pour recevoir l'écoulement de fluide primaire provenant de l'unité de distribution de fluide,
- une pluralité de cuves de réaction, chaque cuve de réaction comprenant au moins une entrée de cuve de réaction, une entrée de cuve de réaction pour chaque cuve de réaction étant reliée à une sortie d'unité capillaire associée pour recevoir un écoulement de fluide secondaire provenant du séparateur d'écoulement.

4. Système de réaction selon la revendication 3, le système de réaction comprenant un bloc de réaction pour recevoir les cuves de réaction et/ou une ou plusieurs cassettes, chaque cassette recevant au moins l'une de la pluralité d'unités capillaires du séparateur d'écoulement, et une enceinte ou un châssis pour recevoir au moins le bloc de réaction et la ou les cassettes.

5. Système de réaction selon la revendication 3, le système de réaction comprenant un dispositif de commande de distribution d'écoulement pour garantir que les débits du premier écoulement de fluide primaire et du second écoulement de fluide primaire sont dans une proportion souhaitée l'un par rapport à l'autre.

6. Système de réaction selon la revendication 3, dans lequel l'appareil de chauffage et/ou l'appareil de refroidissement est un appareil de chauffage comprenant un fil de résistance électrique, lequel fil produit de la chaleur lorsqu'un courant électrique y circule, et lequel fil est enroulé autour du capillaire.

7. Système de réaction selon la revendication 3, dans lequel le capillaire est enroulé autour d'un noyau, lequel noyau comporte des moyens de chauffage et/ou de refroidissement.

8. Système de réaction selon la revendication 3, le système de réaction comprenant un canal auxiliaire qui est relié au collecteur, lequel canal auxiliaire a une résistance à l'écoulement de fluide qui est inférieure à la résistance à l'écoulement de fluide des capillaires des unités capillaires.

9. Système de réaction pour conduire des expériences,
lequel système de réaction comprend :
- une cuve de réaction, ladite cuve de réaction comprenant au moins une entrée de cuve de réaction, laquelle entrée de cuve de réaction est apte à être reliée à une unité de distribution de fluide pour recevoir un écoulement de fluide,
chaque cuve de réaction comprenant en outre au moins une sortie de cuve de réaction pour libérer un écoulement d'effluent,
- une ligne d'effluent de cuve de réaction pour recevoir l'écoulement d'effluent provenant de la cuve de réaction, laquelle ligne d'effluent est en communication fluidique avec au moins une sortie de cuve de réaction, laquelle ligne d'effluent de cuve de réaction comporte une ouverture pour libérer un écoulement de commande de pression,
- un système de commande de contre-pression comprenant une unité capillaire, laquelle unité capillaire comprend
- une entrée d'unité pour recevoir l'écoulement de commande de pression provenant de l'ouverture dans la ligne d'effluent de cuve de réaction,
- une sortie d'unité pour libérer ledit écoulement de commande de pression provenant de l'unité capillaire,
- un capillaire, lequel capillaire est agencé entre l'entrée d'unité et la sortie d'unité de telle sorte que l'écoulement de commande de pression traverse le capillaire,
- un appareil de chauffage et/ou un appareil de refroidissement pour régler la température du capillaire et avec lequel influencer le débit de l'écoulement de commande de pression traversant ledit capillaire,
- un boîtier pour recevoir au moins le capillaire et l'appareil de chauffage et/ou l'appareil de refroidissement de ladite unité capillaire, lequel boîtier assure une isolation thermique du capillaire,
- un capteur de débit qui est adapté pour mesurer le débit de l'écoulement de commande de pression à travers l'unité capillaire,
le système de commande de contre-pression comprenant en outre une unité de réglage d'écoulement pour régler les débits de l'écoulement de commande de pression,
laquelle unité de réglage d'écoulement comprend un dispositif de commande de température pour commander l'appareil de chauffage et/ou l'appareil de refroidissement de l'unité capillaire
le capillaire dans le boîtier de chaque unité capillaire ayant été préparé au préalable et la résistance à l'écoulement de fluide du capillaire à une température de référence et avec un fluide d'une viscosité connue ayant été mesurée et étant connue ; et
l'unité capillaire étant échangeable.
